Europäisches Patentamt

European Patent Office

Office européen des brevets

(11) Publication number: **0 366 202**
**A2**

## EUROPEAN PATENT APPLICATION

(21) Application number: 89202678.2

(22) Date of filing: 24.10.89

(51) Int. Cl.5: **A01B 9/00**

(30) Priority: 26.10.88 NL 8802630

(43) Date of publication of application:
**02.05.90 Bulletin 90/18**

(84) Designated Contracting States:
**AT BE CH DE ES FR GB IT LI NL SE**

(71) Applicant: **C. van der Lely N.V.**
**Weverskade 10 P.O. Box 26**
**NL-3155 ZG Maasland(NL)**

(72) Inventor: **van der Lely, Cornelis**
**7 Brüschenrain**
**Zug(CH)**

(74) Representative: **Mulder, Herman et al**
**Octrooibureau Van der Lely N.V. Weverskade**
**10 P.O. Box 26**
**NL-3155 ZG Maasland(NL)**

(54) **A soil working machine.**

(57) The invention relates to a soil working machine, in particular a plough, which machine comprises a frame and one or more turning means for at least partly turning a furrow slice. The turning means, which include at least one guide member (13, 14, 47) as well as a driven member (18, 49) for turning the furrow slice, co-operate with at least one driven disc (7), the arrangement being such that the said driven disc (7) will pull the machine through the ground, whereby a portion of the turning means moves parts of the furrow slice in one lateral direction and another portion of the turning means moves the furrow slice in an opposite lateral direction. At least one of said guide members (14) consists substantially of a plurality of plate-shaped elements arranged above each other, of which elements the widest sides extend into a direction differing from the vertical plane.

FIG. 1

# A SOIL WORKING MACHINE

The invention relates to a soil working machine, in particular a plough, which machine comprises a frame and one or more turning means for at least partly turning a furrow slice.

As is known, such soil working machines need a considerable amount of power for pulling the machine through the ground.

With the construction according to the invention, it is now possible to provide a plough which, during operation, requires less pulling power and which improves the turning of the furrow slice.

In accordance with the invention this is achieved in that the turning means co-operate with at least one driven disc, the arrangement being such that the said driven disc will pull the machine through the ground, whereby a portion of the turning means moves parts of the furrow slice in one lateral direction and another portion of the turning means moves the furrow slice in an opposite lateral direction. This has the advantage that the amount of power for pulling the plough may be less, since the drive of the disc pulling the machine can be effected from the power take-off shaft of the tractor. Moreover, the turning of the furrow slice will be improved as it will be possible to achieve that the furrow slice can be turned in its own furrow, so that the field that has been ploughed will be without furrows.

A further feature of the invention concerns a soil working machine of the above-defined type, in which the turning means include at least one guide member as well as a driven member for turning the soil. By using this provision, in turning the soil it is also possible to utilize, at least partly, the power of the power take-off shaft of the tractor.

A still further feature of the invention concerns a soil working machine of the above-defined type, in which the turning means include a driven member which co-operates with at least one guide member to carry a furrow slice higher than an adjacent guide member of the turning means. In this manner it is possible to improve the turning of the furrow slice in its own furrow.

A still further feature of the invention concerns a soil working machine of the above-defined type, in which the turning means include at least one mouldboard-shaped guide member consisting substantially of a plurality of plate-shaped elements arranged above each other, of which elements the widest sides extend into a direction differing from the vertical plane. By means of this construction, it is possible to obtain in a simple manner a comparatively light-weight mouldboard-shaped guide member which is capable of effectively absorbing laterally directed forces.

A still further feature of the invention concerns a soil working machine of the above-defined type, which machine includes at least one driven disc, behind which disc there is located at least one upwardly extending support for the attachment of at least one of the turning means. By using this construction, it is possible to obtain a turning means attachment which impedes the passage of a furrow slice to the least possible extent.

For a better understanding of the invention and to show how the same may be carried into effect, reference will now be made, by way of example, to the accompanying drawings showing two embodiments, in which drawings:

Figure 1 is a plan view of a soil working machine according to the invention;

Figure 2 is a view taken on the line II - II in Figure 1;

Figure 3 is a view in the direction indicated by the arrow III in Figure 1;

Figure 4 is a plan view of a second embodiment of a soil working machine according to the invention;

Figure 5 is, to an enlarged scale, a view taken on the line V - V in Figure 4, and

Figure 6 is, to an enlarged scale, a view in the direction indicated by the arrow VI in Figure 4, part of the packer roller located at the rear side having been omitted.

The implement shown in the drawings concerns a soil working machine, in particular a plough.

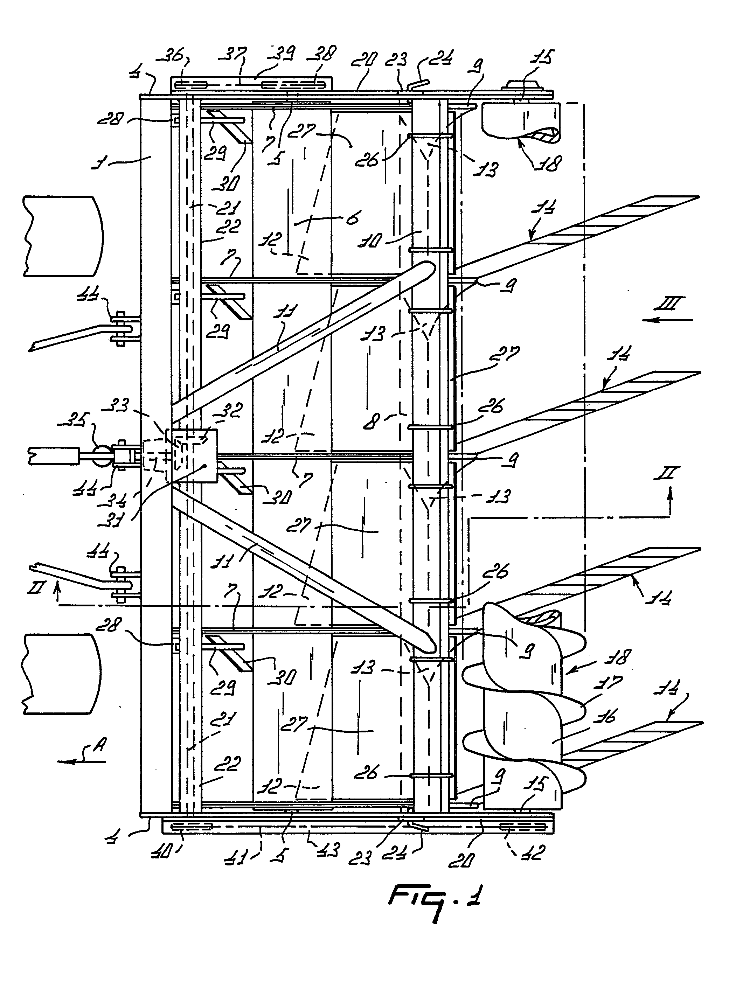

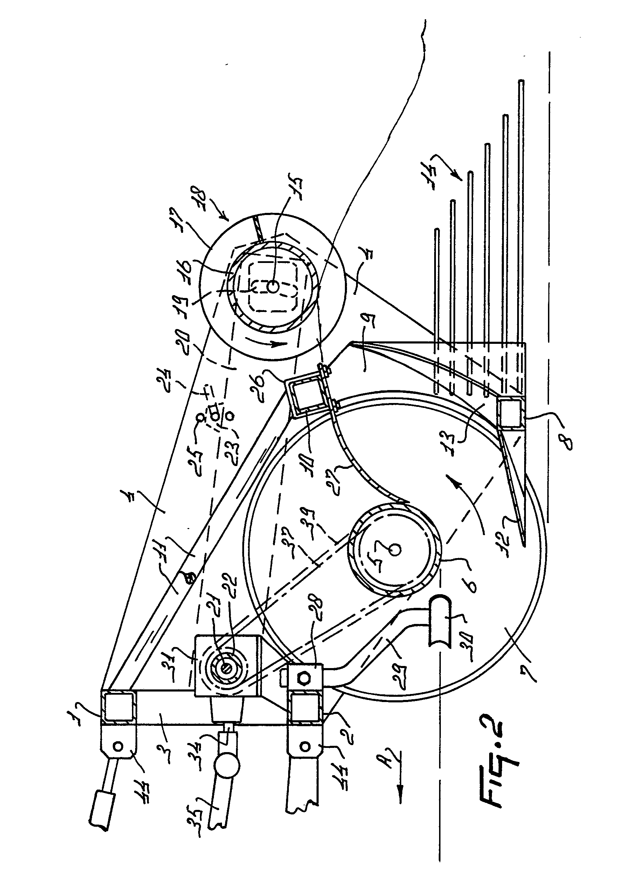

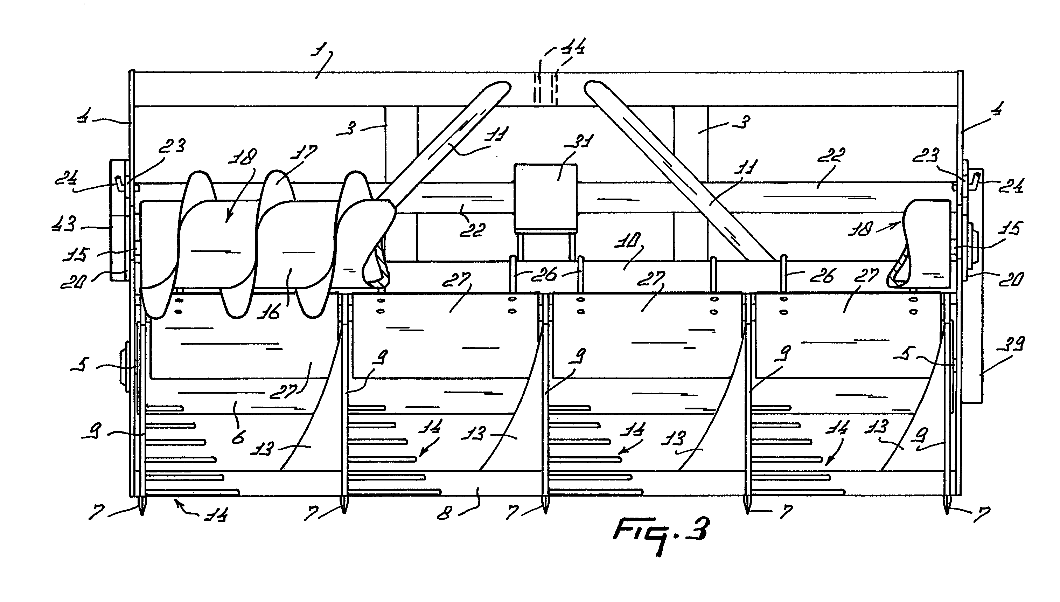

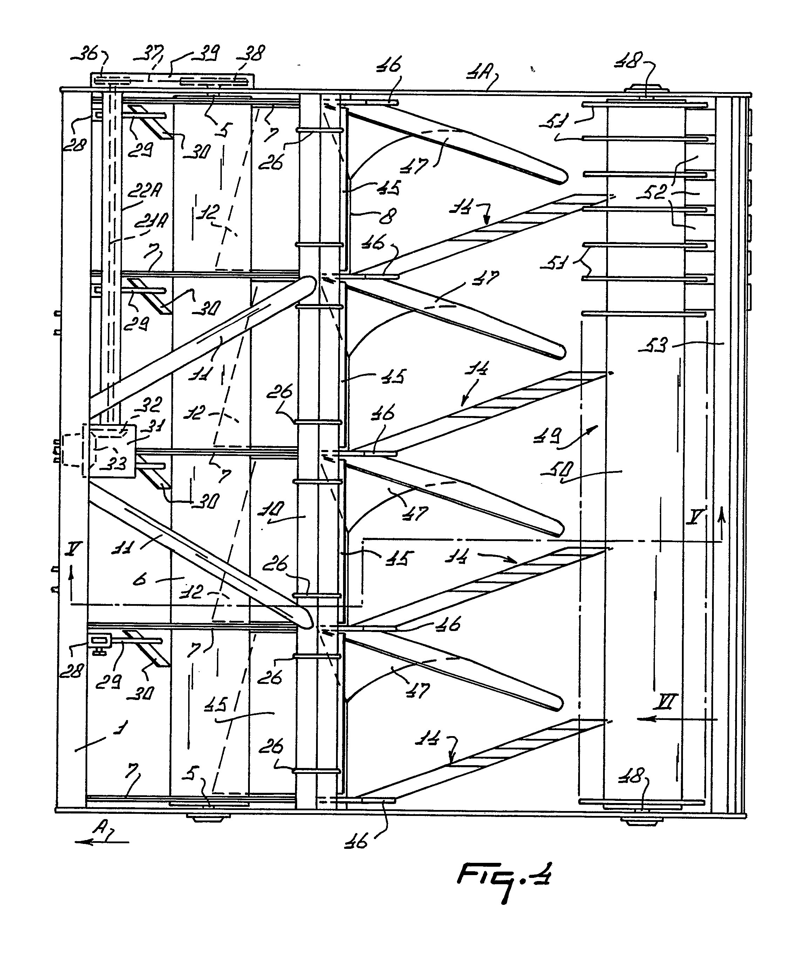

The plough comprises a frame including two frame beams 1 and 2, which frame beams extend transversely to the direction of operative travel A and are superposed at some interspace. Near each of their ends, the frame beams 1 and 2 are interconnected by an upwardly extending beam 3, the arrangement being such that there is constituted a rectangular framework. The ends of the frame beams 1 and 2 and the beam 3 carry an upwardly directed plate 4 which extends into the direction of operative travel A. Each of the plates 4 has a lower side which from the lower frame beam 2 extends obliquely downwardly and rearwardly and merges via a short, at least substantually horizontal portion into an obliquely upwardly and rearwardly extending rear side. The rear side of each plate 4 merges into an obliquely upwardly and forwardly extending upper side that ends at the upper frame beam 1. Approximately near the centre of the obliquely downwardly and rearwardly extending lower side and at some distance thereabove (Figure 2) there is arranged between the plates 4 by means of shafts 5 and bearings (not shown in further detail) a tubular carrier 6, of which the longitudinal centre line, also constituting the rotational axis, extends at least substantially parallel to the frame beams 1 and 2. Preferably, the tubular carrier 6 has a diameter of approximately 30 cms. Near its ends and therebetween at interspaces of, preferably, 60 cms there are mounted on the tubular carrier 6 discs 7 which have a preferred diameter of ± 90 cms and extend at least substantially perpendicular to the longitudinal centre line of the tubular carrier 6. At the circumference, the discs 7 are provided with a cutting edge. As is apparent from Figure 2, behind the discs 7 and at some distance above the lower sides thereof there is arranged between the plates 4 at the level of the horizontal portions between the lower and rear sides thereof a beam 8, which beam extends transversely to the direction of operative travel A. Behind the respective discs 7 there are mounted on the beam 8 at least substantially vertical supports 9. The supports 9 are plate-shaped, their widest sides extending into the direction of operative travel A. The leading sides of the supports 9 extend concentrically relative to the rotational axis of the tubular carrier 6. At its top side, each of the plate-shaped supports 9 is attached to a beam 10 which extends between the plates 4 parallel to the frame beams 1, 2 and to the beam 8 and is connected to the upper frame beam 1 by means of forwardly and upwardly converging struts 11. As is apparent from Figure 1, the beam 8 is provided at its leading side with a forwardly extending, share-shaped member 12, which member has a width that substantially corresponds to the distance between two adjoining discs 7. Each share-shaped member 12 extends from the top side of the beam 8 obliquely downwardly, the arrangement being such that its leading side, which, preferably, has an obliquely extending cutting edge, is located at the level of the bottom side of the beam 8 and reaches to below the tubular carrier 6 (Figure 2). With the exception of the, taken in the direction of operative travel A, left support 9, near each left-hand side of a support 9 there is arranged on the top side of the beam 8 a mouldboard-shaped guide member 13 of plate material. The mouldboard-shaped guide member 13 is triangular in shape, which triangle has its base attached on the beam 8 and extends from the support 9 in the leading side of the beam 8 obliquely rearwardly. Subsequently, the guide member 13 extends from the beam 8 upwardly according to a smooth curve (Figures 1 and 2). With the exception of the, taken in the direction of operative travel A, right support 9, the supports 9 are provided at their right-hand side with a plurality of plate-shaped elements located above each other at an interspace, the lowermost of said plate-shaped elements being flush with the bottom side of the beam 8 (Figure 3). Taken from bottom to top, the plate-shaped elements are decreasing in length, the arrangement being such that the lenght of the topmost plate-shaped element is about equal to at least substantially half that of the lowermost one. The plate-shaped elements constitute a mouldboard-shaped guide member 14. Each of the plate-shaped elements has a width of ± 60 mms and a thickness of ± 10 mms. As is apparent from Figure 1, the plate-shaped elements of a guide member 14 extend from a support 9 obliquely to the, taken in the direction of operative travel A, right-hand side and are at an angle of ± 20° to the said direction of travel. The ends of the plate-shaped elements extend into the direction of operative travel A, the end of the lowermost, longest plate-shaped element being located at least substantially near the middle of the space between two adjoining discs 7 (Figure 1). At the level of the transition between the rear sides and the upper sides of the plates 4 there is arranged by means of shafts 15 a tubular carrier 16 comprising a plate-shaped, helically extending portion 17. The carrier 16 and the portion 17 together constitute a rotationally driven member 18 in the shape of an auger. The rotational axis of the rotating member 18 consisting of the tubular carrier 16 and the plate-shaped portion 17 extends transversely to the direction of operative travel A and, as is apparent from Figure 2, is located near the upper sides of the discs 7. Seen in plan view, the said axis is located in front of the middle of the mouldboard-shaped guide member 14 constituted by the plate-shaped elements (Figure 1). The mouldboard-shaped guide members 13 and 14 together constitute a turning means for at least partly turning a furrow slice, which furrow slice is cut loose by means of the discs 7 and the share-shaped members 12 during operation. The shafts 15 of the tubular carrier 16 are adjustable in height and are passed through slots provided in each of the plates 4 and are supported by arms 20, which arms 20 extend rearwardly and downwardly along the outer sides of the plates 4 and are pivotable about a drive shaft 21 that extends transversely to the direction of operative travel A. The drive shaft 21 is located near the middle between the two frame beams 1, 2 and is accommodated in a tube 22 which extends between the plates 4 and is located parallel to the frame beams 1 and 2. The upper side of each of the arms 20 is provided with a lug 23, through which is passed a pin 24 which can also be passed through one of three superjacent apertures 25 provided in the plates 4, the arrangement being such that the position of the driven member 18 can be altered. At the lower side of the beam 10 there are arranged plate-shaped members 27 by means of brackets 26, the downwardly directed ends of which are provided with thread and are adapted to co-operate with nuts. The members 27 have a width that corresponds to the distance between two adjoining discs 7 and extend from the beam 10 downwardly via a smooth curve, the leading sides of said members 27 reaching just below the rotational axis of the tubular carrier 6 to as far as the circumference thereof (Figure 2). The members 27 can act as scrapers for scraping soil from the tubular carrier 6. With the exception of the, taken in the direction of operative travel A, left disc 7, at the left-hand side beside each of the discs 7 there is arranged on the lower frame beams 2 a sleeve 28. Inside the sleeve 28 there is mounted a carrier 29 which from the sleeve extends downwardly over some distance and subsequently obliquely downwardly and rearwardly, and whose lower side is provided with a plough body 30 attached thereto. From the, taken in the direction of operative travel A, left-hand side of a disc 7, a plough body 30 extends obliquely sidewardly at an angle of ± 45°. A plough body 30 will move a thin layer of soil to a side, thereby improving the ploughing action of the machine. The drive shaft 21 accommodated in the tube 22 is passed through a gear box 31 located near the middle of the tube, in which gear box the shaft 21 is provided with a bevel gearwheel 32 which is adapted to co-operate with a bevel gearwheel 33 on a shaft 34, which shaft 34 projects from the gear box 31 at the front side and can be coupled to the power take-off shaft of a tractor via an intermediate shaft 35. At the, in the direction of operative travel A, right-hand side the drive shaft 21 projects beyond an arm 20 and is provided with a sprocket wheel 36, around which is laid a chain 37 which is also laid around a sprocket wheel 38 provided on a shaft 5 of the tubular carrier 6 projecting beyond the plate 4. The assembly is surrounded by a chain guard 39. At the opposite side, the drive shaft 21 also projects beyond an arm 20 and is provided with a sprocket wheel 40, around which is laid a chain 41 which is also laid around a sprocket wheel 42 provided on a portion of a shaft 15 of the tubular carrier 16 of the driven member 18, which portion projects beyond the arm 20. The assembly is surrounded by a chain guard 43.

The machine as described in the preceding operates as follows:

During operation, the machine is coupled by means of coupling means constituted by pairs of lugs 44 provided on the frame beams 1 and 2 to the three-point lifting hitch of a tractor, and the shaft 34 projecting from the front side of the gear box 31 is connected to the power take-off shaft of the tractor by means of the intermediate shaft 35. In the operating position as shown in Figure 2, the machine is sustaining on the soil by means of the tubular carrier 6 having mounted thereon the discs 7, so that, during travel in the direction indicated by the arrow A, the soil is cut at distances of ± 60 cms by means of the said discs 7. By means of the discs 7, whose rotational direction is indicated in Figure 2 by an arrow, and by means of the share-shaped members 12 provided at the leading side of the beam 8, the soil will be cut vertically and horizontally. The respective furrow slices will be urged upwardly at one side alongside the plate-shaped guide member 13 and by the mouldboard-shaped guide member 14 constituted by the plate-shaped elements. Taken in the direction of operative travel A, the left-hand side the furrow slice is displaced towards the right by the guide member 14. During this movement, the furrow slice as a whole is pushed towards the right under a certain rotation thereof until its right-hand side moves upwardly and gets within the reach of the driven member 18 constituted by an auger, which auger, in view of the rotational direction obtained by the tubular carrier 16 during operation, displaces the upper side of the furrow slice in the opposite direction, i.e. towards the left, the arrangement being such that a turning of the furrow slice is effected and this furrow slice is turned into its own furrow. Crop residues can be moved sidewardly by means of the plough bodies 30 arranged near the front side of each of the discs 7, whereafter the whole is compressed by the tubular carrier 6, by means of which the machine is sustaining on the ground during operation. As the beam 8 and the share-shaped members 12 are located slightly above the lower sides of the discs 7, it is possible to prevent that, when rocks are present in the soil, the share-shaped members 12 will be damaged thereby. By a change in the position of the driven member 18, which may have any suitable shape, it is possible to adapt the machine to various types of soil, as well as to the desired turning of the furrow slice.

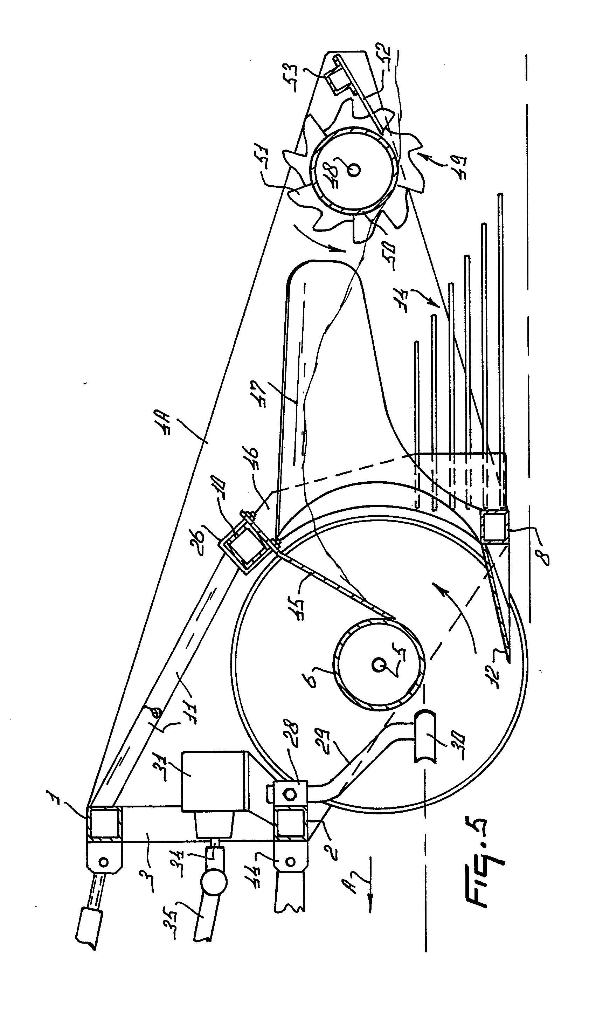

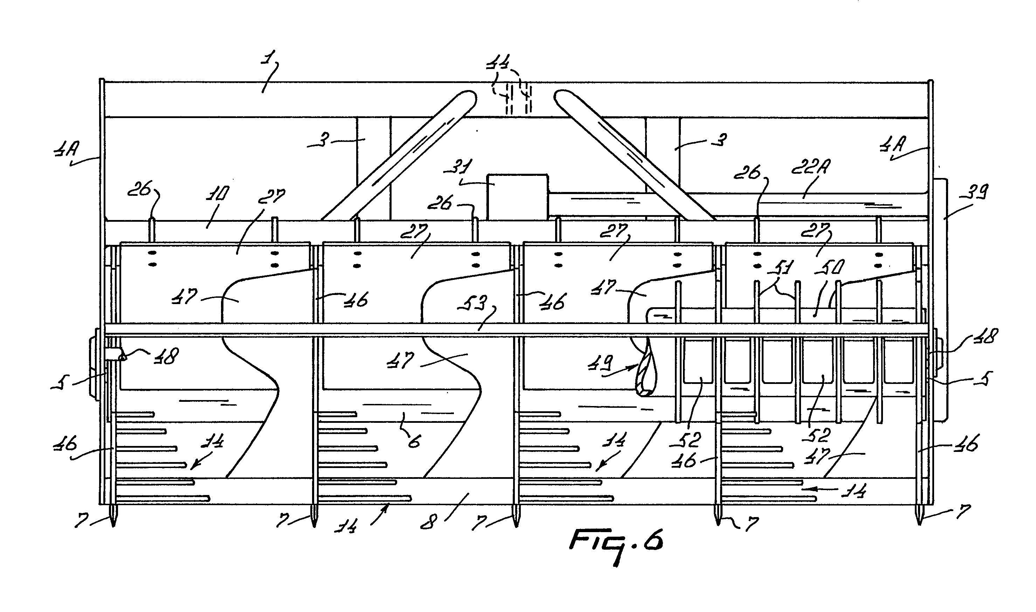

A second embodiment of a plough according to the invention is shown in Figures 4 to 6, in which parts corresponding to those in the preceding embodiment have been indicated by the same reference numerals. In this embodiment, the beam 10 is located between plates 4A which substantially have the same shape as the plates 4 with the exception of a greater length. On the beam 10 there are mounted plate-shaped members 45 which, like in the preceding embodiment, have a width that corresponds to the distance between two adjoining discs 7. In this embodiment, the plate-shaped members 45 extend from the circumference of the discs at least substantially straight (Figure 5) to as far as the circumference of the tubular carrier 6, for which, as well as for the sides of the discs, they constitute a scraping member. Between the beams 8 and 10 there are arranged supports 46 which, like the supports 9, are located closely behind a disc 7 and at their leading sides extend concentrically relative to the rotational axis of the carrier 6 (Figure 5). In this embodiment, too, the beam 8 is provided with a forwardly extending, share-shaped member 12. Instead of the guide members 13, there are arranged plate-shaped, mouldboard-shaped guide members 47. From the beam 8 upwardly, each guide member 47 merges into a portion of the support 46. In a cross-sectional view, the guide member 47 constitutes a segment of a circle (Figures 4 and 5). As is apparent from the plan view of Figure 4, both the front side and the rear side of the guide member 47 substantially reach to as far as the middle of the space between two discs 7. In this embodiment, the turning means is constituted by the guide members 14 and 47, the guide members 47 moving the furrow slice sidewardly to the left as well as upwardly and the guide members 14 moving same to the right. Between the rear ends of the plates 4A, a roller is arranged freely rotatably by means of shafts 48 and (non-shown) bearings accommodated in bearing housings. The roller includes a tubular carrier 50 being provided with cams 51, thereby constituting a packer roller. Between the cams 51 there are arranged scrapers 52 mounted on a transverse carrier 53 provided between the plates 4A and behind the roller. As regards the support of the machine and the function of the discs 7, the machine shown in Figures 4 to 6 operates substantially identically to that of the first embodiment. In the second embodiment, however, the furrow slice, after having been cut by the share-shaped member 12, is urged obliquely rearwardly and upwardly by means of the discs 7, whose rotational direction is indicated in Figure 5. In this connection, the furrow slice is moved towards the right by the guide member 14 located at the left-hand side. The right-hand side of the furrow slice is moved upwardly and towards the left by the plate-shaped, mouldboard-shaped guide member 47 at the right-hand side, the arrangement being such that the furrow slice is turned about its longitudinal axis in its own furrow. The packer roller 49 can also be driven and has a compacting effect. The plough according to the invention is of a comparatively compact construction. With the plough it is possible to turn a furrow slice in its own furrow. By means of the discs 7, the displacement of the furrow slice is supported. The power-driven discs have a propulsive effect. Due to this propulsive effect, a comparatively small amount of power will be required for the pulling of the machine through the ground, while, due to the fact that the furrow slice is turned about its longitudinal axis in its own furrow, the field ploughed by such a plough will be furrowless. The plough according to the invention may be of a compact construction. Crop residues can be crushed properly by means of the tubular carrier 6, so that the turning of the furrow slices will be improved.

The plough according to the invention will improve the cutting of the furrow slice at three sides thereof, so that a portion of the turning means can move parts of the furrow slice in one lateral direction and another portion of the turning means can move parts of the furrow slice in an opposite lateral direction in such a way that the field that has been ploughed will be without or almost without furrows.

## Claims

1. A soil working machine, in particular a plough, which machine comprises a frame and one or more turning means for at least partly turning a furrow slice, characterized in that the turning means co-operate with at least one driven disc (7), the arrangement being such that the said driven disc (7) will pull the machine through the ground, whereby a portion of the turning means moves parts of the furrow slice in one lateral direction and an other portion of the turning means moves the furrow slice in an opposite lateral direction.

2. A soil working machine as claimed in claim 1, characterized in that the turning means include at least one guide member (13, 14, 47) as well as a driven member (18, 49) for turning the furrow slice.

3. A soil working machine, in particular a plough, which machine comprises a frame and one or more turning means for at least partly turning a furrow slice, characterized in that the turning means include at least one guide member (13, 14, 47) as well as a driven member (18, 49) for turning the furrow slice.

4. A soil working machine as claimed in claim 1 or 2, characterized in that the driven member (18, 49) co-operates with at least one guide member (13, 47) to carry a furrow slice higher than an adjacent guide member (14) of the turning means.

5. A soil working machine, in particular a plough, which machine comprises a frame and one or more turning means for at least partly turning a furrow slice, characterized in that the turning means include a driven member (18, 49) which co-operates with at least one guide member (13, 47) to carry a furrow slice higher than an adjacent guide member (14) of the turning means.

6. A soil working machine as claimed in any one of claims 2 to 5, characterized in that the driven member (18, 9) co-operates with one or more discs (7) in order to displace portions of the furrow slice at least partly transversely to the direction of operative travel (A).

7. A soil working machine, in particular a plough, which machine comprises a frame and one or more turning means for at least partly turning a furrow slice, characterized in that the turning means include a driven member (18, 49) which co-operates with one or more discs (7) in order to displace portions of the furrow slice at least partly transversely to the direction of operative travel (A).

8. A soil working machine as claimed in any one of claims 2 to 7, characterized in that the turning means include at least one mouldboard-shaped guide member (14) consisting substantially of plate-shaped elements, the widest portions of which elements extend at least substantially in the horizontal direction.

9. A soil working machine, in particular a plough, which machine comprises a frame and one or more turning means for at least partly turning a furrow slice, characterized in that the turning means include at least one mouldboard-shaped guide member (14) consisting substantially of a plurality of plate-shaped elements arranged above each other, of which elements the widest sides extend into a direction differing from the vertical plane.

10. A soil working machine as claimed in any one of the preceding claims, characterized in that behind a driven disc (7) there is located at least one upwardly extending support (9) for at least one turning means.

11. A soil working machine, in particular a plough, which machine comprises a frame and one or more turning means for at least partly turning a furrow slice, characterized in that the machine includes at least one driven disc (7), behind which disc there is located at least one upwardly extending support (9) for the attachment of at least one of the turning means.

12. A soil working machine as claimed in claim 10 or 11, characterized in that a support (9) is arranged at a transverse beam (8) located between two vertical plates (4) extending into the direction of operative travel (A).

13. A soil working machine, in particular a plough, which machine comprises a frame and one or more turning means for at least partly turning a furrow slice, characterized in that at both sides of the turning means there are arranged plate-shaped frame portions (4) which extend at least substantially into the direction of operative travel (A), and that between the plates (4) there is located at least one transverse beam (8) to which at least portions of the turning means are attached.

14. A soil working machine as claimed in any one of the preceding claims, characterized in that the machine includes a plurality of driven discs (7) located in side-by-side relationship and extending at least substantially parallel to a plane in the direction of operative travel (A) of the machine, and that the turning means arranged behind the discs (7) engage a furrow slice which is moved rearwardly between the said discs (7).

15. A soil working machine as claimed in any one of the preceding claims, characterized in that a turning means includes a share-shaped member (12) which cuts loose the lower side of a furrow slice, as well as two adjacent mouldboard-shaped guide members (13, 14, 47) which are arranged such that they tend to turn the furrow slice about is longitudinal axis.

16. A soil working machine as claimed in claim 15, characterized in that a first mouldboard-shaped guide member (14) urges the furrow slice at its lower side into the direction of the other, second mouldboard-shaped guide member (13, 47).

17. A soil working machine as claimed in claim 16, characterized in that the first mouldboard-shaped guide member (14) includes plate-shaped elements arranged above each other, which elements from their attachment extend at an angle of $\pm 20°$ to the direction of operative travel (A) into the direction of the adjoining second guide member (13, 47).

18. A soil working machine as claimed in claim 17, characterized in that the widest sides of the plate-shaped elements of the first mouldboard-shaped guide member (14) are located at least substantially horizontally and the length thereof decreases from below upwardly, the arrangement being such that the length of the uppermost plate-shaped element is equal to at least substantially half that of the lowermost one.

19. A soil working machine as claimed in any one of claims 16 to 18, characterized in that the second mouldboard-shaped guide member (13, 47) consists of a plate, which guide member from its lower side merges into a portion which, seen in plan view, extends at least substantially to the end of the first mouldboard-shaped guide member (14).

20. A soil working machine as claimed in any one of the preceding claims, characterized in that the second mouldboard-shaped guide member (13, 47) has a cross-section which extends at least substantially according to a segment of a circle.

21. A soil working machine as claimed in any one of claims 15 to 20, characterized in that the turning means include a driven member (18) in the form of an auger, which member extends transversely to the direction of operative travel (A) and is adapted to co-operate with a mouldboard-shaped guide member (13, 14), the arrangement being such that the auger moves the upper side of the furrow slice in a direction which is opposite to that in which the mouldboard-shaped guide member (14) moves the furrow slice at its lower side.

22. A soil working machine as claimed in claim 21, characterized in that the driven member (18) is located above the mouldboard-shaped guide member (13, 14) and is turnable about an axis extending transversely to the direction of operative travel (A).

23. A soil working machine as claimed in any one of claims 15 to 22, characterized in that the mouldboard-shaped guide members (13, 14, 47) are arranged at upwardly directed supports (9) located directly behind a disc (7).

24. A soil working machine as claimed in claim 23, characterized in that the leading sides of the supports (9) extend at least substantially concentrically relative to the rotational axis of the discs (7).

25. A soil working machine als claimed in any one of claims 14 to 24, characterized in that the discs (7) are arranged on a tubular carrier (6) which supports the machine during operation.

26. A soil working machine as claimed in claim 25, characterized in that the discs (7) have a diameter of ± 90 cms.

27. A soil working machine as claimed in claim 25 or 26, characterized in that at one side of the discs (7) there is arranged a plough body (30).

28. A soil working machine as claimed in claim 27, characterized in that the machine comprises several plough bodies (30) which are located at the same side of the discs (7).

29. A soil working machine as claimed in any one of claims 23 to 28, characterized in that the supports (9) for the mouldboard-shaped turning means (13, 14) are arranged on a beam (8) which extends transversely to the direction of operative travel (A) and is located between two side plates (4), the said beam (8) being located near the lower sides of the discs (7).

30. A soil working machine as claimed in claim 29, characterized in that on the leading side of the beam (8) there are arranged share-shaped members (12) which reach to below the rotational axis of the discs (7).

31. A soil working machine as claimed in claim 30, characterized in that the share-shaped members (12) have a width that at least substantially corresponds to the distance between two adjoining discs (7).

32. A soil working machine as claimed in claim 30 or 31, characterized in that the share-shaped members (12) are located at a higher level than the lower sides of the discs (7).

33. A soil working machine as claimed in any one of the preceding claims, characterized in that behind the turning means there is arranged a rotatable member constituted by a packer roller (49) which extends transversely to the direction of operative travel (A).

34. A soil working machine as described in the foregoing and as illustrated in the drawings.

FIG. 1

Fig.2

Fig. 3

EP 0 366 202 A2

Fig.4

Fig. 5

FIG.6

EP 0 366 202 A2